# EUROPÄISCHE PATENTANMELDUNG

(11) **EP 2 187 135 A2**
(43) Veröffentlichungstag der Anmeldung: **19.05.2010**
(21) Anmeldenummer: 09174884.8
(22) Anmeldetag: 03.11.2009
(51) Int. Cl.: F24D 10/00

(54) **Wärmeübergabestation mit Kaskade**

(30) Priorität: 18.11.2008 DE 102008057908
(71) Anmelder: SWM Services GmbH, 80287 München (DE)
(72) Erfinder: Langer, Ludwig, 85591 Vaterstetten (DE); Weinmann, Edwin, 82407 Wielenbach (DE)
(74) Vertreter: Lucke, Andreas

(57) **Zusammenfassung**

In einer Fernwärme-, Nahwärme- oder Trinkwasserübergabestation wird der Rückstrom des jeweils vorangehenden Sekundärwärmestroms zum Aufheizen des jeweils nachfolgenden Sekundärwärmestroms verwendet. Eine Mischung sekundärseitiger Wärmeströme unterschiedlicher Temperaturen und ein damit einhergehender Exergieverlust werden vermieden. Die erfindungsgemäße Wärmeübergabestation ermöglicht einen besonders energieeffizienten Wärmetransport aus dem Femwärmenetz bzw. Nahwärmenetz in Wohn-oder Gewerbeeinheiten, die einen Heizungskreislauf und einen Warmwasserzirkulationskreislauf aufweisen. Die Erfindung bezieht sich auch auf ein entsprechendes Verfahren zur Wärmeübergabe in einer Fernwärme- oder Nahwärme-Übergabestation.

## Beschreibung

### Gebiet der Erfindung

Die Erfindung bezieht sich auf eine Wärmeübergabestation zur Nahwärme-, Fernwärme- oder Trinkwasserversorgung von Wohneinheiten oder Gewerbeeinheiten, die mehrere Versorgungskreisläufe mit unterschiedlichen Temperaturniveaus aufweisen.

### Stand der Technik

Wärmeübergabestationen werden an der Schnittstelle zwischen einem Fern- oder Nahwärmenetz bzw. einer Heizzentrale und Kundenheizungsanlagen eingesetzt. Die Kundenheizungsanlage kann dabei beispielsweise ein einzelnes Wohnhaus, ein Mehrfamilienhaus, Bürogebäude, Hotel oder Krankenhaus versorgen.

In der Wärmeübergabestation erfolgt in der Regel zum einen eine hydraulische Trennung des Fernwärmenetzes bzw. Nahwärmenetzes von der mit vermindertem Druck betriebenen Kundenheizungsanlage. Zum anderen erfolgt die Übergabe der Wärmeenergie aus dem Fernwärme- oder Nahwärmenetz bzw. der Heizungsanlage an den Heizungskreislauf und den Warmwasserkreislauf der Kunden- bzw. Gebäudeanlage, wobei Heizungskreislauf und Warmwasserkreislauf üblicherweise bei unterschiedlichen Temperaturniveaus betrieben werden. In Mehrfamilien-Wohnhäusern ist der Warmwasserkreislauf gewöhnlich als Zirkulationskreislauf ausgebildet, in dem Warmwasser der gewünschten Temperatur stets vorgehalten und im Falle einer Entnahme aus dem Leitungssystem nachgefüllt wird.

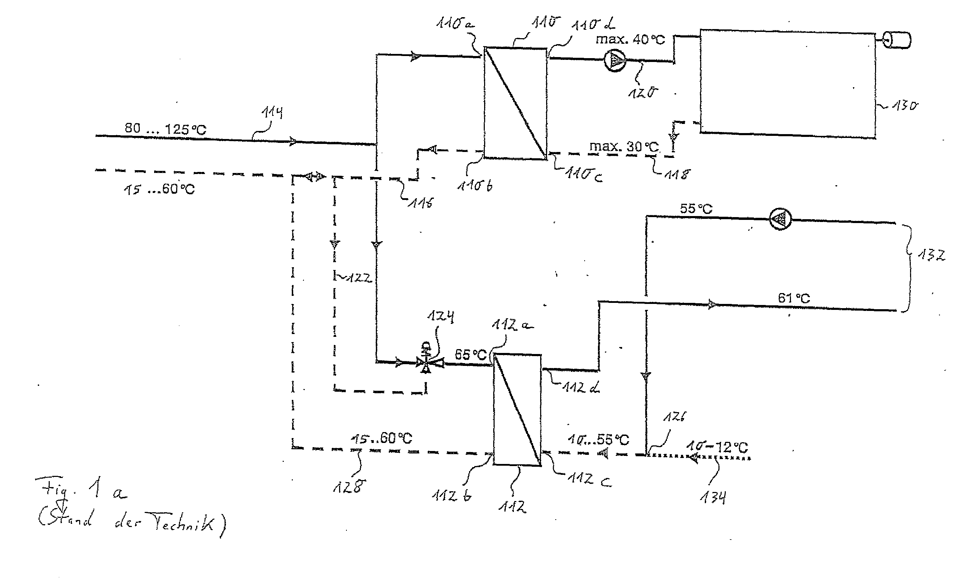

Eine aus dem Stand der Technik vorbekannte Wärmeübergabestation mit Trinkwassererwärmung wird nachfolgend mit Bezug auf Fig. 1a beschrieben. Eine solche Übergabestation ist in den Technischen Anschlussbedingungen (TAB) der Anmelderin in weiteren Einzelheiten erläutert. Das primärseitige Fernwärmenetz und die sekundärseitige Kundenanlage sind über einen ersten Wärmetauscher 110 und einen zweiten Wärmetauscher 112 gekoppelt, mit denen Wärmeenergie aus dem Fernwärmenetz an die Kundenanlage, die einen Heizungskreislauf 130 und einen separaten Warmwasserkreislauf 132 umfasst, übertragen wird. Der ersten Wärmetauscher 110 weist dazu einen primärseitigen Zulaufanschluss 110a zur Aufnahme eines primärseitigen Wasserstroms 114, der von einer Wärmequelle, beispielsweise einem Heizkraftwerk, bereitgestellt wird, sowie einen primärseitigen Rücklaufanschluss 110b zur Abgabe eines erkalteten Rückstroms 116 auf. Auf der Sekundärseite umfasst der erste Wärmetauscher 110 einen sekundärseitigen Zulaufanschluss 110c zur Aufnahme eines sekundärseitigen Heizungszustroms 118 aus dem Heizungskreislauf 130 sowie einen sekundärseitigen Rücklaufanschluss 110d zur Abgabe eines erwärmten sekundärseitigen Heizungsrückstroms 120. Das erwärmte Wasser des Heizungsrückstroms 120 durchströmt die Heizungsanlage und kehrt als erkalteter Heizungszustrom 118 an den ersten Wärmetauscher 110 zurück, wo die erneute Aufheizung stattfindet. Der erste Wärmetauscher 110 überträgt auf diese Weise Wärmeenergie aus dem Fernwärmenetz, das je nach Witterungslage üblicherweise bei zwischen 80 und 125°C betrieben wird, an den kundenseitigen Heizungskreislauf 130, der je nach Auslegung bei üblicherweise 30°C bis 90°C betrieben wird.

Der zweite Wärmetauscher 112 weist ebenfalls einem primärseitigen Zulaufanschluss 112a zur Aufnahme des primärseitigen Wärmestroms 114 sowie einen primärseitigen Rücklaufanschluss 112b zur Abgabe des erkalteten Wärmestroms an das Fernwärmenetz auf. Über eine Verbindungsleitung 122 und ein Ventil 124 kann zumindest ein Teil des primärseitigen Rückstroms 116 des ersten Wärmetauschers 110 in den primärseitigen Zulaufanschluss 112a des zweiten Wärmetauschers 112 eingespeist werden, um die im primärseitigen Rückstrom 116 verbliebenen Energie zumindest teilweise zur Aufheizung von Kaltwasser zu nutzen. Auf der Sekundärseite weist der zweite Wärmetauscher 112 einen Zulaufanschluss 112c zur Aufnahme von aufzuheizendem Wasser aus dem Zirkulationskreislauf 132 sowie einen sekundärseitigen Rücklaufanschluss 112d zur Abgabe des erwärmten Wasserstromes an den Zirkulationskreislauf 132 auf. Das über den Rücklaufanschluss 112d an den Zirkulationskreislauf 132 abgegebene Warmwasser durchströmt das kundenseitige Warmwasserleitungsnetz und tritt als abgekühlter Rückstrom durch den Zulaufanschluss 112c wieder in den zweiten Wärmetauscher 112 ein, wo eine erneute Aufheizung stattfindet. Im Zirkulationskreislauf 132 wird dadurch Warmwasser bei einer Temperatur zwischen 55 und 61°C vorgehalten und stets nachgeheizt.

Entnimmt der Kunde Warmwasser aus dem Zirkulationskreislauf 132, wird an einem Verbindungsknoten 126 eine entsprechende Menge Kaltwasser 134 eingespeist und im zweiten Wärmetauscher 112 auf 61°C erwärmt.

Die Vermischung des Rückstroms des Zirkulationskreislaufs 132 mit einem Kaltwasserstrom 134 am Verbindungsknoten 126 führt zu Exergieverlusten und setzt daher den thermodynamischen Wirkungsgrad der Übergabestation herab. Zudem bewirkt die zeitlich unregelmäßige Kaltwasserzufuhr am Verbindungsknoten 126, dass die Temperatur des primärseitigen Rückstroms 128 des zweiten Wärmetauschers 112 über einen weiten Temperaturbereich schwankt: Wird (fast) kein Wasser aus dem Zirkulationskreislauf 132 entnommen, liegt sie mit ca. 60°C kaum unter der Temperatur des primärseitigen Wärmestroms am Zulaufanschluss 112a. Werden dagegen nach einer Entnahme von Warmwasser am Verbindungsknoten 126 große Mengen Kaltwasser bei einer Temperatur von 10°C bis 12°C eingespeist, fällt die Temperatur des primärseitigen Rückstroms 128 auf bis zu 15°C ab und liegt damit unterhalb der Temperatur des sekundärseitigen Heizungsrückstroms 118. Aufgrund dieser zeitlich unregelmäßigen Schwankungen lässt sich der primärseitige Rückstrom 128 des zweiten Wärmetauschers 112 trotz des vergleichsweise hohen Temperaturniveaus des Zirkulationskreislaufs 132 nicht zur Erwärmung des Heizungskreislaufs 130, beispielsweise durch Einspeisung in den primärseitigen Zulaufanschluss 110a des ersten Wärmetauschers 110, nutzen und geht als Abwärme verloren, so dass der Wirkungsgrad der Übergabestation weiter abfällt.

Eine hohe Rücklauftemperatur im primärseitigen Rückstrom 128 führt darüber hinaus nicht nur zu hohen Wärmeverlusten im Fernwärmeleitungsnetz, sondern setzt auch den Wirkungsgrad der Heizkraftwerke herab.

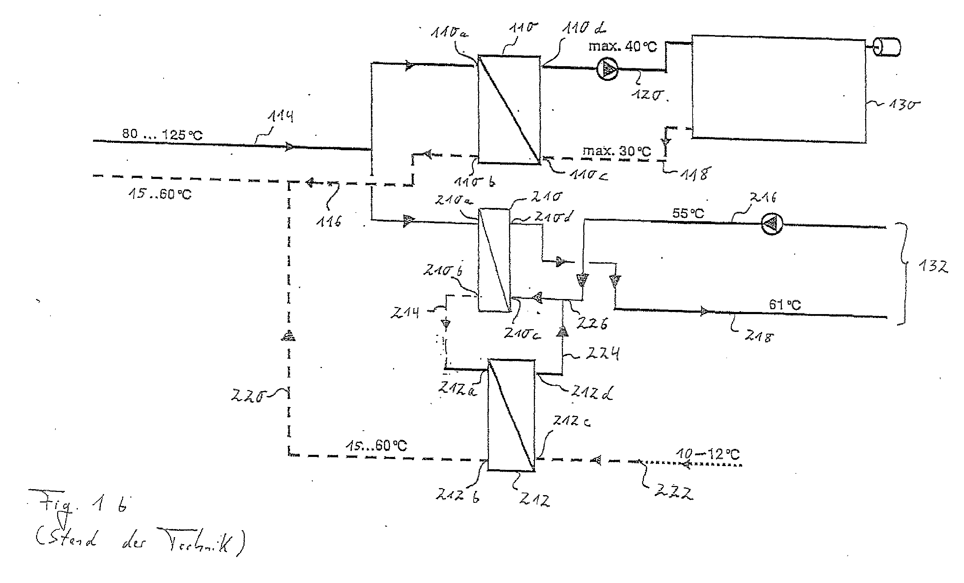

Fig. 1b zeigt eine weitere aus dem Stand der Technik vorbekannte Wärmeübergabestation mit Trinkwassererwärmung. Diese Übergabestation unterscheidet sich von der vorstehend mit Bezug auf Fig. 1a beschriebenen Übergabestation vornehmlich dadurch, dass neben dem ersten Wärmetauscher 110 zur Heizwasserbereitung zwei Wärmetauscher zur Trinkwassererwärmung eingesetzt werden: ein zweiter Wärmetauscher 210 zur Zirkulationsnachheizung und ein dritter Wärmetauscher 212 zum Vorheizen von Frischwasser, das dem Zirkulationskreislauf 132 zum Ausgleich von Entnahmeverlusten zugeführt wird.

Aufbau und Funktionsweise des ersten Wärmetauschers 110 zur Versorgung des Heizungskreislaufes entsprechen den vorstehend mit Bezug auf Fig. 1a beschriebenen. Jedoch wird der erkaltete primärseitige Rückstrom 116 des ersten Wärmetauschers 110 im Unterschied zur vorstehend beschriebenen Übergabestation nach dem Austritt aus dem primärseitigen Rücklaufanschluss 110b unmittelbar in das Fernwärmenetz zurückgespeist, ohne dass ein weiterer Wärmetauscher durchströmt wird.

Der zweite Wärmetauscher 210 und der dritte Wärmetauscher 212 bilden dagegen eine zweistufige Kaskade, die dem ersten Wärmetauscher 110 parallel geschaltet ist und zur Erwärmung des Warmwasser-Zirkulationskreislaufs 132 dient.

Der zweite Wärmetauscher 210 weist dazu einen primärseitigen Zulaufanschluss 210a zur Aufnahme des primärseitigen Wärmestromes 114 sowie einen primärseitigen Rücklaufanschluss 210b zur Abgabe eines erkalteten primärseitigen Rückstroms 214 auf. Auf der Sekundärseite umfasst der zweite Wärmetauscher 210 einen sekundärseitigen Zulaufanschluss 210c zur Aufnahme eines sekundärseitigen Zirkulationszustroms 216 aus dem Zirkulationskreislauf 132 sowie einen sekundärseitigen Rücklaufanschluss 210d zur Abgabe eines erwärmten sekundärseitigen Zirkulationsrückstroms 218 des Zirkulationskreislaufs 132. Das im zweiten Wärmetauscher durch thermischen Kontakt mit dem primärseitigen Wärmestrom 114 auf ca. 61°C erwärmte Wasser des Zirkulationsrückstroms 218 durchströmt das Warmwasserleitungsnetz der Kundenanlage und kehrt als erkalteter Zirkulationszustrom 216 an den zweiten Wärmetauscher 210 zurück, wo eine erneute Aufheizung stattfindet. Solange keine Entnahme aus dem Zirkulationskreislauf 132 erfolgt, wird dessen Temperatur allein unter Verwendung des zweiten Wärmetauschers 210 auf dem vorbestimmten Niveau gehalten.

Der primärseitige Rückstrom 214 des zweiten Wärmetauschers 210 wird über den primärseitigen Zulaufanschluss 212a dem dritten Wärmetauscher 212 zugeführt und durchströmt ihn primärseitig. Der erkaltete Rückstrom 220 wird nach Austritt aus dem primärseitigen Rücklaufanschluss 212b in das Fernwärmenetz zurückgespeist. Wird Brauchwasser aus dem Warmwasserkreislauf 132 entnommen, strömt Frischwasser entsprechender Menge mit einer Temperatur von ca. 10 bis 12°C über einen Kaltwasserzulauf 222 und den sekundärseitigen Zulaufanschluss 212c in den dritten Wärmetauscher 212. Das durch thermischen Kontakt mit dem primärseitigen Rückstrom 214 erwärmte Frischwasser wird als sekundärseitiger Rückstrom 224 des dritten Wärmetauschers 212 über einen Verzweigungsknoten 226 in den Warmwasserzirkulationsrückstrom 216 eingespeist, so dass die Entnahmeverluste ausgeglichen werden.

Da am Verzweigungsknoten 226 vorgewärmtes Frischwasser nachgespeist wird, sind die Exergieverluste im Vergleich zu der mit Bezug auf Fig. 1a beschriebenen Fernwärmeübergabestation vermindert. Jedoch geht der Wärmeinhalt des primärseitigen Rückstroms 116 des ersten Wärmetauschers 110 ungenutzt verloren, so dass sich auch bei dieser vorbekannten Übergabestation eine vergleichsweise hohe Rücklauftemperatur einstellt, die zu den vorstehend beschriebenen Nachteilen führt und den thermodynamischen Wirkungsgrad herabsetzt.

### Überblick über die Erfindung

Es besteht daher Bedarf nach einer Wärmeübergabestation, die die vorstehend genannten Nachteile vermeidet und einen für die Gesamtanlage maximierten thermodynamischen Wirkungsgrad, insbesondere eine verringerte Rücklauftemperatur, aufweist.

Diese Aufgabe wird durch ein erfindungsgemäßes Verfahren zur Wärmeübergabe mit den Merkmalen von Anspruch 1 bzw. eine erfindungsgemäße Wärmeübergabestation mit den Merkmalen von Anspruch 9 bzw. 10 gelöst. Die abhängigen Ansprüche beziehen sich auf vorteilhafte Ausführungsformen.

Das erfindungsgemäße Verfahren zur Wärmeübergabe in einer Fernwärme-Übergabestation oder Nahwärme-Übergabestation umfasst das Zuführen eines primärseitigen Wärmestromes an einen ersten Wärmetauscher zum Aufheizen eines sekundärseitigen ersten Wärmestromes, das Aufheizen eines zweiten Wärmestromes unter Verwendung eines primärseitigen Rückstroms des ersten Wärmetauschers sowie ferner das Aufheizen eines von dem zweiten Wärmestrom (insbesondere räumlich und/oder stofflich) getrennten dritten Wärmestromes unter Verwendung des zweiten Wärmestromes.

In einer bevorzugten Ausführungsform umfasst das Aufheizen des sekundärseitigen zweiten Wärmestromes das Zuführen des primärseitigen Rückstroms des ersten Wärmetauschers an einen zweiten Wärmetauscher und das Aufheizen des sekundärseitigen dritten Wärmestromes das Zuführen eines primärseitigen Rückstromes des zweiten Wärmetauschers an einen dritten Wärmetauscher.

In einer alternativen Ausführungsform umfasst das Aufheizen des zweiten Wärmestromes das zumindest teilweise Einspeisen des primärseitigen Rückstroms des ersten Wärmetauschers in den zweiten Wärmestrom und das Aufheizen des sekundärseitigen dritten Wärmestromes das Zuführen eines Rückstromes des zweiten Wärmestromes an einen dritten Wärmetauscher. Diese Ausführungsform der Erfindung, in der im Vergleich zur voranstehend beschriebenen Ausführungsform der zweite Wärmetauscher durch eine direkte Verbindung mit dem zweiten Wärmestrom ersetzt ist, eignet sich insbesondere zur Verwendung in der Nahwärmeübergabe, bei der aufgrund des geringen Druckniveaus im Versorgungsnetz eine hydraulische Trennung von der sekundärseitigen Kundenanlage entbehrlich sein kann.

Der erste Wärmetauscher kann insbesondere zur Auftechterhaltung der Temperatur eines Warmwasser-Zirkulationskreislaufs eingesetzt werden. Sein primärseitiger Rückstrom weist ein annähernd konstantes Temperaturniveau auf und kann vorteilhaft zur Erwärmung eines kundenseitigen Heizungskreislaufs über den zweiten Wärmetauscher oder alternativ durch direkte Einspeisung genutzt werden, während Kaltwasser bei Bedarf über den separaten dritten Wärmetauscher auf die Temperatur eines sekundärseitigen Zulaufstromes des ersten Wärmetauschers erwärmt und dem Zirkulationskreislauf zugeführt wird. Durch Nutzung des Rückstroms des ersten Wärmetauschers zur Heizungswasser-Erwärmung sinkt die Rücklauftemperatur im Fernwärmenetz bzw. Nahwärmenetz. Aufgrund der Bereitstellung eines separaten Wärmetauschers zur Kaltwassererwärmung entfällt zudem die thermodynamisch ungünstige Vermischung von Wärmeströmen mit unterschiedlichen Temperaturniveaus, und der Wirkungsgrad der Übergabestation steigt.

Die Begriffe "Zustrom" bzw. "Zulauf" sowie "Rückstrom" bzw. "Rücklauf" sind in dieser Schrift stets auf den einzelnen Wärmetauscher bezogen. Ein Zustrom ist also ein Flüssigkeits- bzw. Massestrom in den Wärmetauscher hinein. Die entsprechenden Anschlüsse werden als Zulaufanschlüsse bezeichnet. Ein Rückstrom ist ein Wärme- oder Massestrom aus dem Wärmetauscher heraus; die entsprechenden Anschlüsse, durch welche der Rückstrom ausströmt, werden als Rücklaufanschlüsse bezeichnet. Jeder Wärmetauscher umfasst vier Anschlüsse: einen primärseitigen Zulaufanschluss und einen primärseitigen Rücklaufanschluss sowie einen sekundärseitigen Zulaufanschluss und einen sekundärseitigen Rücklaufanschluss.

In einer bevorzugten Weiterbildung der ersten Ausführungsform weist der primärseitige Rückstrom des ersten Wärmetauschers eine höhere Temperatur auf als ein sekundärseitiger Zustrom des zweiten Wärmetauschers. Zusätzlich oder alternativ kann der primärseitige Rückstrom des zweiten Wärmetauschers eine höhere Temperatur aufweisen als ein sekundärer Zustrom des dritten Wärmetauschers.

Indem die Wärmetauscher nach abnehmender Temperatur eines sekundärseitigen Zustroms in Reihe geschaltet werden, können die primärseitigen Rückströme der jeweils vorangehenden Wärmetauscher zum Aufheizen der sekundärseitigen Wärmeströme der jeweils nachfolgenden Wärmetauscher eingesetzt werden. Dadurch wird ein größerer Anteil der primärseitig von der Wärmequelle zur Verfügung gestellten Energie an die Sekundärkreisläufe übergeben und die Temperatur des Wärmerückstroms an die Wärmequelle entsprechend abgesenkt. Der Wirkungsgrad der Übergabestation ist daher erhöht. Die geringere Rücklauftemperatur führt zu verminderten Wärmeverlusten im Wärmeleitungsnetz und ermöglicht aufgrund der größeren Temperaturdifferenz zwischen Zustrom und Rückstrom einen effizienteren Betrieb der Heizkraftwerke. Da ein höherer Anteil der primärseitig bereitgestellten Wärmeenergie übertragen wird, lassen sich bei gleicher Netzkapazität größere Wärmemengen übertragen. Gleichzeitig sinkt der Pumpstrombedarf, da bei gleich bleibendem Energieübertrag ein kleinerer Massestrom im Fernwärmekreislauf bzw. Nahwärmekreislauf umgewälzt werden muss.

In einer bevorzugten Ausführungsform wird der primärseitige Rückstrom des ersten Wärmetauschers vor dem Aufheizen des zweiten Wärmestroms in einem vorbestimmten ersten Mischungsverhältnis mit dem primärseitigen Wärmestrom gemischt. Durch Einstellen des Mischungsverhältnisses lassen sich Menge und Temperatur des resultierenden Wärmestroms geeignet einstellen. Insbesondere erlaubt die Zufuhr von Wärmeenergie aus dem primärseitigen Wärmestrom einerseits die Erhöhung der Durchflussmenge, andererseits die Erhöhung der Temperatur.

Entsprechend wird in einer weiteren vorteilhaften Ausführungsform der Rückstrom des zweiten Wärmetauschers bzw. des zweiten Wärmestromes vor dem Zuführen an den dritten Wärmetauscher in einem vorbestimmten zweiten Mischungsverhältnis mit dem primärseitigen Wärmestrom gemischt. Durch geeignete Wahl des Mischungsverhältnisses lassen sich am Zulaufanschluss des dritten Wärmetauschers Wärmeströme geeigneter Flussrate und Temperatur einstellen.

In einer weiteren bevorzugten Ausführungsform wird der primärseitige Wärmestrom vor dem Zuführen an den ersten Wärmetauscher in einem vorbestimmten dritten Mischungsverhältnis mit dem primärseitigen Rückstrom des ersten Wärmetauschers gemischt. Dadurch kann auch am primärseitigen Zulaufanschluss des ersten Wärmetauschers ein Wärmestrom geeigneter Temperatur und Flussrate eingestellt werden. Insbesondere erlaubt die Beimischung des Rückstroms eine Absenkung der Temperatur am primärseitigen Zulaufanschluss des ersten Wärmetauschers und wirkt damit einem nachteiligen Kalkausfall im ersten Wärmetauscher entgegen.

In einer Weiterbildung des erfindungsgemäßen Verfahrens erfolgt das Mischen der jeweiligen Wärmeströme mittels einer Strahlpumpe, wobei der primärseitige Wärmestrom ein Treibmedium bildet. Da eine solche Pumpe sehr einfach aufgebaut ist und keinerlei bewegliche Teile hat, ist sie besonders robust und wartungsarm. Zudem kommt sie ohne zusätzliche Energieversorgung aus.

In einer bevorzugten Ausführungsform sind das zweite und/oder dritte Mischungsverhältnis so eingestellt, dass nach dem Mischen die Temperatur des jeweiligen primärseitigen Zustroms zwei bis zehn Kelvin über der vorbestimmten Temperatur eines zugehörigen sekundärseitigen Rückstroms liegt. Auf diese Weise lässt sich eine besonders effiziente Wärmeübertragung von der Primärseite auf die Sekundärseite sicherstellen.

In einer weiteren Ausführungsform wird ein primärseitiger Rückstrom des dritten Wärmetauschers mit dem primärseitigen Rückstrom des ersten Wärmetauschers und/oder zweiten Wärmetauschers gemischt.

In einer vorteilhaften Weiterbildung der Erfindung wird der dritte Wärmestrom nach dem Aufheizen mit einem sekundärseitigen Zustrom des ersten Wärmetauschers gemischt.

In einer bevorzugten Ausführungsform des erfindungsgemäßen Verfahrens wird die Temperatur des dritten Wärmestromes an die Temperatur des sekundärseitigen Zustroms des ersten-Wärmetauschers angepasst. Das Einspeisen des dritten Wärmestroms in den Sekundärkreislauf erfolgt, wenn ein Strömungsmedium aus dem Sekundärkreislauf entnommen wird. Dadurch lassen sich Entnahmeverluste des Sekundärkreislaufs ausgleichen und dabei sicherstellen, dass Wärmeströme gleicher oder annähernd gleicher Temperatur gemischt werden, so dass Exergieverluste beim Mischen vermieden werden.

In einer Weiterbildung der Erfindung wird das Aufheizen des dritten Wärmestromes in Abhängigkeit von einer aus dem sekundärseitigen ersten Wärmestrom entnommenen Menge eines Strömungsmediums und/oder einer Temperatur des Strömungsmediums gesteuert und/oder geregelt.

In einer bevorzugten Weiterbildung wird das Aufheizen des dritten Wärmestroms in einem ersten Schritt in Abhängigkeit von der aus dem sekundärseitigen ersten Wärmestrom entnommenen Menge des Strömungsmediums gesteuert und in einem nachfolgenden zweiten Schritt in Abhängigkeit von der Temperatur eines Rückstroms des ersten Wärmetauschers geregelt. Die Menge des aus dem sekundärseitigen ersten Wärmestrom entnommenen Strömungsmediums kann aus dem dritten Wärmestrom, der sekundärseitig den dritten Wärmetauscher durchströmt, in entsprechendem Umfang ausgeglichen werden und daher insbesondere in der sekundärseitigen Zuführleitung des dritten Wärmetauschers erfasst werden.

Die Steuerung des Aufheizens des dritten Wärmestroms in Abhängigkeit von der entnommenen Strömungsmenge erlaubt ein sehr schnelles Ausgleichen der Temperatur- und Masseverluste im sekundärseitigen ersten Wärmestrom. Die nachfolgende Regelung des Aufheizens in Abhängigkeit von der Temperatur eines Rückstroms des ersten Wärmetauschers ermöglicht dagegen ein genaues Einstellen des Temperaturniveaus im ersten Wärmestrom. Die erfindungsgemäße Kombination einer anfänglichen Steuerung des Aufheizens des dritten Wärmestroms in Abhängigkeit von der sekundärseitig detektierten Menge des entnommenen Strömungsmediums mit einer nachfolgenden Regelung in Abhängigkeit von der Temperatur eines Rückstromes des ersten Wärmetauschers verbindet die Vorteile einer besonders schnell ansprechenden Nachspeisung mit einer präzisen Einstellung des Temperaturniveaus im ersten Wärmestrom.

In einer bevorzugten Ausführungsform wird das zweite Mischungsverhältnis in Abhängigkeit von der aus dem sekundärseitigen ersten Wärmestrom entnommenen Menge eines Strömungsmediums und/oder der Temperatur des sekundärseitigen Rückstromes des ersten Wärmetauschers gesteuert und/oder geregelt.

In einer bevorzugten Ausführungsform ist ein primärseitiges Strömungsmedium und/oder ein sekundärseitiges Strömungsmedium Wasser.

Die Erfindung bezieht sich auch auf eine Fernwärmeübergabestation oder Nahwärmeübergabestation mit einem ersten Wärmetauscher, einem zweiten Wärmetauscher und einem dritten Wärmetauscher mit jeweils einem primärseitigen Zulaufanschluss und einem primärseitigen Rücklaufanschluss sowie einem sekundärseitigen Zulaufanschluss und einem sekundärseitigen Rücklaufanschluss. Die erfindungsgemäße Wärmeübergabestation umfasst ferner eine primärseitige erste Zuführleitung, die an einem ersten Ende mit dem primärseitigen Zulaufanschluss des ersten Wärmetauschers gekoppelt ist und an einem dem ersten Ende entgegengesetzten zweiten Ende mit einer Wärmequelle koppelbar ist. Ferner umfasst die Wärmeübergabestation eine primärseitige erste Rücklaufleitung, die an einem ersten Ende mit dem primärseitigen Rücklaufanschluss des ersten Wärmetauschers und an einem dem ersten Ende entgegengesetzten zweiten Ende mit dem primärseitigen Zulaufanschluss des zweiten Wärmetauschers gekoppelt ist, sowie eine primärseitige zweite Rücklaufleitung, die an einem ersten Ende mit dem primärseitigen Rücklaufanschluss des zweiten Wärmetauschers und an einem dem ersten Ende entgegengesetzten zweiten Ende mit dem primärseitigen Zulaufanschluss des dritten Wärmetauschers gekoppelt ist.

Wie vorstehend geschildert, vermeidet die erfindungsgemäße Reihenschaltung dreier Wärmetauscher zum einen die exergetisch nachteilige Mischung von Wärmeströmen unterschiedlicher Temperaturniveaus und ermöglicht zum anderen eine besonders effiziente Nutzung des Energiegehalts der jeweiligen primärseitigen Rückströme der Wärmetauscher. Auf diese Weise lässt sich die Temperatur des zur Wärmequelle zurückströmenden Massestroms absenken und der Wirkungsgrad der Wärmeübergabestation anheben.

In einer alternativen Ausführungsform bezieht sich die Erfindung auf eine Fernwärmeübergabestation oder Nahwärmeübergabestation mit einem ersten Wärmetauscher und einem dritten Wärmetauscher mit jeweils einem primärseitigen Zulaufanschluss und einem primärseitigen Rücklaufanschluss sowie einem sekundärseitigen Zulaufanschluss und einem sekundärseitigen Rücklaufanschluss. Diese erfindungsgemäße Wärmeübergabestation umfasst ferner eine primärseitige erste Zuführleitung, die an einem ersten Ende mit dem primärseitigen Zulaufanschluss des ersten Wärmetauschers gekoppelt ist und an einem dem ersten Ende entgegengesetzten zweiten Ende mit einer Wärmequelle koppelbar ist. Ferner umfasst die Wärmeübergabestation eine primärseitige erste Rücklaufleitung, die an einem Ende mit dem primärseitigen Rücklaufanschluss des ersten Wärmetauschers und an einem dem ersten Ende entgegengesetzten zweiten Ende mit einer Zulaufleitung eines Zirkulationskreislaufs, insbesondere eines Heizungskreislaufs, verbunden ist, sowie eine zweite Rücklaufleitung, die an einem ersten Ende mit einer Rücklaufleitung des Zirkulationskreislaufs und an einem dem ersten Ende entgegengesetzten zweiten Ende mit dem primärseitigen Zulaufanschluss des dritten Wärmetauschers gekoppelt ist.

Von der vorstehend beschriebenen ersten Ausführungsform unterscheidet sich diese alternative Ausführungsform darin, dass der zweite Wärmetauscher durch einen direkten Zulauf in den entsprechenden Sekundärkreislauf ersetzt ist. Es ergeben sich dieselben vorstehend mit Bezug auf die erste Ausführungsform beschriebenen Vorteile. Zudem ermöglicht die alternative Ausführungsform durch den Verzicht auf den zweiten Wärmetauscher einen besonders einfachen und wartungsarmen Aufbau der erfindungsgemäßen Wärmeübergabestation, wenn auf eine hydraulische Trennung des Zirkulationskreislaufs von dem Versorgungsleitungsnetz verzichtet werden kann. Diese Ausführungsform bietet sich insbesondere zur Verwendung in Nahwärmenetzen an, die mit gegenüber einem Fernwärmenetz primärseitig deutlich verringertem Druck betrieben werden.

In einer bevorzugten Ausführungsform ist die erste Rücklaufleitung über ein erstes Verbindungselement mit der ersten Zuführleitung gekoppelt.

In einer weiteren Ausführungsform ist die erste Rücklaufleitung über ein zweites Verbindungselement mit einer zweiten Zuführleitung, die mit der Wärmequelle verbindbar oder mit der ersten Zuführleitung verbunden ist, gekoppelt.

In einer weiteren vorteilhaften Ausgestaltung ist die zweite Rücklaufleitung über ein drittes Verbindungselement mit einer dritten Zuführleitung, die mit der Wärmequelle verbindbar oder mit der ersten Zuführleitung verbunden ist, gekoppelt.

Das erste Verbindungselement und/oder das dritte Verbindungselement können dabei jeweils eine Strahlpumpe umfassen.

In einer vorteilhaften Ausgestaltung umfasst die erfindungsgemäße Fernwärme-Übergabestation ein Steuerelement zum Einstellen eines Mischungsverhältnisses an dem ersten Verbindungselement und/oder dem zweiten Verbindungselement und/oder dem dritten Verbindungselement.

Entsprechend einer weiteren vorteilhaften Ausführungsform ist der primärseitige Rücklaufanschluss des dritten Wärmetauschers mit einer dritten Rücklaufleitung gekoppelt, die mit der ersten Rücklaufleitung und/oder der zweiten Rücklaufleitung verbunden oder verbindbar ist.

Gemäß einer vorteilhaften Weiterbildung der Erfindung ist der sekundärseitige Rücklaufanschluss des dritten Wärmetauschers über eine vierte Rücklaufleitung mit einer sekundärseitigen vierten Zuführleitung, die mit dem sekundärseitigen Zulaufanschluss des ersten Wärmetauschers verbunden ist, gekoppelt.

In einer vorteilhaften Weiterbildung umfasst die Übergabestation zusätzlich eine Temperaturerfassungseinrichtung zur Erfassung der Temperatur eines Strömungsmediums in einer mit dem sekundärseitigen Rücklaufanschluss des ersten Wärmetauschers verbundenen fünften Rücklaufleitung und/oder eine Durchflusserfassungseinrichtung zur Erfassung einer Stromrate und/oder Strommenge eines Strömungsmediums in einer mit dem sekundärseitigen Zulaufanschluss des dritten Wärmetauschers verbundenen sekundärseitigen fünften Zuführleitung. Wie vorstehend geschildert, erlaubt die Kombination einer Durchflusserfassung mit einer Temperaturerfassung die vorteilhaften Effekte einer schnellen Nachspeisung von aus der fünften Rücklaufleitung entnommenem Strömungsmedium in Verbindung mit einer nachfolgenden präzisen Einregelung des Temperaturniveaus.

In einer vorteilhaften Weiterbildung erfolgt die Ansteuerung bzw. Einregelung des dritten Wärmetauschers über das dritte Verbindungselement, das über eine erste Datenverbindung mit der Durchflusserfassungseinrichtung verbunden ist und/oder über eine zweite Datenverbindung mit der Temperaturerfassungsvorrichtung verbunden ist.

In einer weiteren Ausführungsform liegt der primärseitige Zulaufanschluss des ersten Wärmetauschers und/oder des zweiten Wärmetauschers und/oder des dritten Wärmetauschers unterhalb des entsprechenden primärseitigen Rücklaufanschlusses. Indem die wärmere Seite des Wärmetauschers unter der kälteren Seite liegt, wirkt die Konvektion der Ausbildung oder Ablagerung von Rückständen, insbesondere dem Kalkausfall, im Leitungssystem des Wärmetauschers entgegen. Dadurch wird die Lebensdauer der Übergabestation erhöht und der Wartungsbedarf vermindert.

In einer bevorzugten Ausführungsform sind der sekundärseitige Zulaufanschluss und der sekundärseitige Rücklaufanschluss des ersten Wärmetauschers mit einem Brauchwasserzirkulationskreislauf verbunden.

In einer weiteren vorteilhaften Ausführungsform sind der sekundärseitige Zulaufanschluss und der sekundärseitige Rücklaufanschluss des zweiten Wärmetauschers mit einem Heizungskreislauf verbunden.

Schließlich ist einer vorteilhaften Ausführungsform der sekundärseitige Zulaufanschluss des dritten Wärmetauschers mit einem Kaltwasserzulauf verbunden.

### Beschreibung einer bevorzugten Ausführungsform

Die zahlreichen Merkmale und Vorteile des erfindungsgemäßen Verfahrens zur Wärmeübergabe sowie der erfindungsgemäßen Wärmeübergabestation lassen sich am besten anhand einer ausführlichen Beschreibung der beigefügten Figuren verstehen, in denen:
- Fig. 1 a: eine aus dem Stand der Technik vorbekannte Wärmeübergabestation zeigt;
- Fig. 1b: eine weitere aus dem Stand der Technik vorbekannte Wärmeübergabestation zeigt;
- Fig. 2: schematisch eine erfindungsgemäße Wärmeübergabestation veranschaulicht;
- Fig. 3a - 3d: beispielhaft die unter Verwendung der erfindungsgemäßen Wärmeübergabestation erzielte Reduktion der Rücklauftemperatur bei unterschiedlichen Betriebsbedingungen veranschaulicht.

Der Aufbau konventioneller Wärmeübergabestationen und die mit diesem Aufbau verbundenen Nachteile wurden vorstehend mit Bezug auf Fig. 1a und Fig. 1b beschrieben.

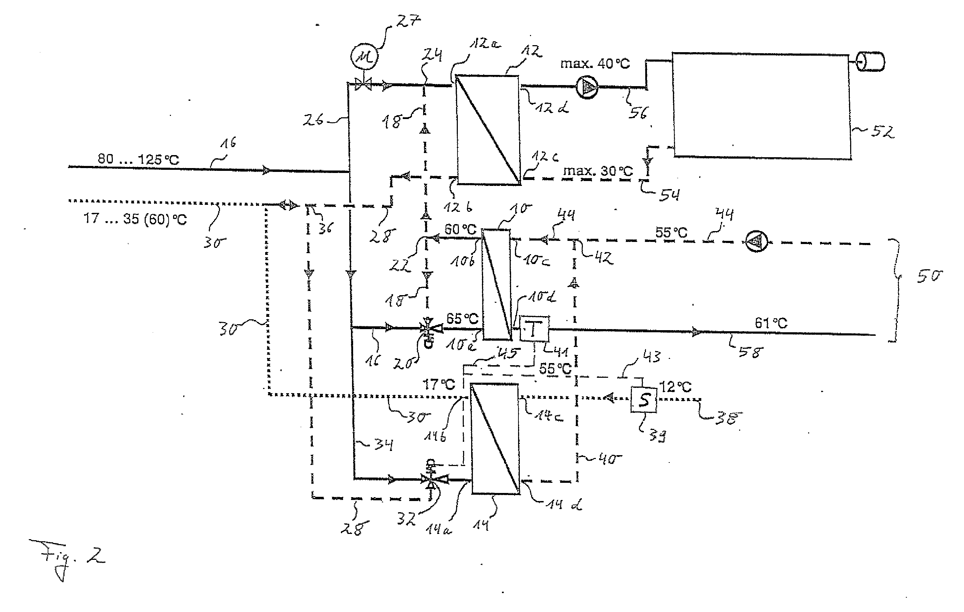

Fig. 2 zeigt eine erfindungsgemäße Wärmeübergabestation, die als dreistufige Kaskade ausgelegt ist, in einer schematischen Übersicht. Wie in der Übersichtsdarstellung der Fig. 2 zu erkennen ist, weist ein erster Wärmetauscher 10 einen primärseitigen Zulaufanschluss 10a, einen primärseitigen Rücklaufanschluss 10b, einen sekundärseitigen Zulaufanschluss 10c sowie einen sekundärseitigen Rücklaufanschluss 10d auf. Der primärseitige Zulaufanschluss 10a und der primärseitige Rücklaufanschluss 10b sind innerhalb des ersten Wärmetauschers 10 über ein primärseitiges Leitungselement (nicht gezeigt) miteinander verbunden und über ein Fernwärmeleitungsnetz oder Nahwärmeleitungsnetz mit einer Wärmequelle (nicht gezeigt) gekoppelt. Entsprechend sind der sekundärseitige Zulaufanschluss 10c und der sekundärseitige Rücklaufanschluss 10d miteinander über ein sekundärseitiges Leitungselement (nicht gezeigt) verbunden und Teil eines Warmwasser-Zirkulationskreislaufs einer Wohn- oder Gewerbeimmobilie. Das Fernwärmenetz unterscheidet sich vom Nahwärmenetz vor allem durch den größeren Abstand zur Wärmequelle und das höhere Druckniveau im Leitungsnetz. Die erfindungsgemäße Wärmeübergabestation kann in gleicher Weise sowohl im Fernwärmenetz als auch im Nahwärmenetz eingesetzt werden.

Bei dem ersten Wärmetauscher 10 kann es sich um einen Rekuperator handeln, in dem die primärseitigen und sekundärseitigen Stoffströme räumlich getrennt sind, aber miteinander in Wärmekontakt stehen. Jedoch ist die Erfindung nicht auf Rekuperatoren beschränkt, sondern beispielsweise auch auf Regeneratoren, die einen Wärmespeicher aufweisen, der zeitversetzt mit dem primärseitigen und dem sekundärseitigen Wärmestrom in Kontakt gebracht wird, sowie auf Wärmetauscher, bei denen eine kombinierte Wärme- und Stoffübertragung stattfindet, anwendbar.

Ein zweiter Wärmetauscher 12 weist analog zum ersten Wärmetauscher 10 einen primärseitigen Zulaufanschluss 12a, einen primärseitigen Rücklaufanschluss 12b, einen sekundärseitigen Zulaufanschluss 12c sowie einen sekundärseitigen Rücklaufanschluss 12d auf. Der primärseitige Zulaufanschluss 12a und der primärseitige Rücklaufanschluss 12b stehen wiederum miteinander über ein primärseitiges Leitungselement und über das Fernwärmeleitungsnetz oder Nahwärmeleitungsnetz mit der Wärmequelle in Stoffaustausch. Entsprechend sind der sekundärseitige Zulaufanschluss 12c und der sekundärseitige Rücklaufanschluss 12d innerhalb des Wärmetauschers über ein sekundärseitiges Leitungselement verbunden, das Teil eines Heizungskreislaufs der Kundenanlage ist. Bei dem gezeigten zweiten Wärmetauscher 12 sind die primärseitigen und sekundärseitigen Wärmeströme wiederum räumlich und stofflich getrennt, stehen aber in thermischem Kontakt miteinander. Alternativ kann der zweite Wärmetauscher 12 auch als Regenerator oder als direkter Wärmeüberträger ausgebildet sein.

Ein dritter Wärmetauscher 14 ist entsprechend aufgebaut und weist einen primärseitigen Zulaufanschluss 14a, einen primärseitigen Rücklaufanschluss 14b, einen sekundärseitigen Zulaufanschluss 14c sowie einen sekundärseitigen Rücklaufanschluss 14d auf. Für den Aufbau des dritten Wärmetauschers gilt die obenstehende Beschreibung des ersten Wärmetauschers 10 und des zweiten Wärmetauschers 12 analog.

Die unterschiedliche Größe der Wärmetauscher 10, 12 und 14 in der zeichnerischen Darstellung der Fig. 2 weist schematisch auf deren unterschiedliche Heizleistungen hin. So beträgt in der gezeigten Ausführungsform die Leistung des ersten Wärmetauschers 30 kW, die des zweiten Wärmetauschers 160 kW und die des dritten Wärmetauschers 90 kW.

In der gezeigten Ausführungsform ist der primärseitige Zulaufanschluss 10a des ersten Wärmetauschers über eine primärseitige erste Zuführleitung 16 mit der (nicht gezeigten) Wärmequelle, beispielsweise einem Fernwärme-Heizkraftwerk, gekoppelt. Das Fernwärme-Heizkraftwerk stellt einen kontinuierlichen Warmwasserstrom bereit, dessen Temperatur je nach Witterungslage auf 80 bis 125°C eingestellt ist. Der Wärmestrom tritt über in den Zulaufanschluss 10a in den ersten Wärmetauscher 10 ein und durchströmt das primärseitige Leitungselement bis zum primärseitigen Rücklaufanschluss 10b, über den er in eine primärseitige erste Rücklaufleitung 18 austritt. Beim Durchströmen des Wärmetauschers kühlt sich der Wärmestrom auf etwa 60°C ab und erwärmt dabei durch thermischen Kontakt mit dem sekundärseitigen Leitungselement das im Zirkulationskreislauf 50 gegenläufig umströmende Wasser und zusätzlich das bei Bedarf von dem dritten Wärmetauscher 14 zuströmende vorgewärmte Wasser, welches mit ca. 55°C über den sekundärseitigen Zulaufanschluss 10c in den ersten Wärmetauscher 10 eintritt und ihn mit ca. 61°C über den sekundärseitigen Rücklaufanschluss 10d verlässt. Auf diese Weise wird durch thermischen Kontakt Wärmeenergie aus dem Fernwärmeleitungsnetz in den Zirkulationskreislauf 50 übertragen und steht dort den Kunden als aufgewärmtes Brauchwasser zur Verfügung. Der erste Wärmetauscher 10 ist ausgelegt, um die durch Leitungsverluste bewirkte Absenkung der Temperatur im Zirkulationskreislauf 50 auszugleichen und zusätzlich das nachgespeiste vorgewärmte Frischwasser nachzuheizen.

Über die primärseitige erste Rücklaufleitung 18 und das erste Verbindungselement 20 ist der primärseitige Rücklaufanschluss 10b des ersten Wärmetauschers 10 mit der primärseitigen ersten Zuführleitung 16 verbunden. Das erste Verbindungselement 20 ist als Wasserstrahlpumpe ausgebildet. Der Massestrom in der ersten Zuführleitung 16 wirkt als Treibmedium und saugt durch Impulsaustausch den primärseitigen Rückstrom aus der ersten Rücklaufleitung 18 in die erste Zuführleitung 16, wo er sich in einem vorbestimmten ersten Mischungsverhältnis mit dem primärseitigen Wärmestrom vermischt. Das Mischungsverhältnis wird so eingestellt, dass die Temperatur des Wärmestroms beim Eintritt in den ersten Wärmetauscher 10 über den primärseitigen Zulaufanschluss 10a zwei bis zehn Kelvin über der Temperatur des sekundärseitigen Rückstroms des Zirkulationskreislaufs liegt. Im Ausführungsbeispiel der Fig. 2 beträgt die eingestellte Zulauftemperatur 65°C, der Temperaturunterschied damit vier Kelvin.

Wasserstrahlpumpen sind sehr einfach aufgebaut, besitzen kaum bewegliche Teile und sind daher sehr robust und wartungsarm. Zudem kommen sie ohne eigene Energieversorgung aus. Sie sind daher für eine Anwendung in der erfindungsgemäßen Wärmeübergabestation besonders geeignet. Alternativ kann jedoch anstelle einer Strahlpumpe auch ein konventioneller Beimischkreis mit einer aktiven Pumpe und einem Dreiwegeventil eingesetzt werden.

In der gezeigten Ausführungsform ist die primärseitige erste Rücklaufleitung 18 zweiästig ausgeführt. Über einen ersten Verzweigungsknoten 22 ist der primärseitige Rücklaufanschluss 10b des ersten Wärmetauschers 10 mit dem primärseitigen Zulaufanschluss 12a des zweiten Wärmetauschers 12 verbunden. Der Anteil des Masserückstroms des ersten Wärmetauschers 10, der nicht über das erste Verbindungselement 20 und den primärseitigen Zulaufanschluss 10a dem ersten Wärmetauscher 10 abermals zugeführt wird, wird über den primärseitigen Zulaufanschluss 12a in den zweiten Wärmetauscher 12 eingespeist und kann auf diese Weise zur Erwärmung des sekundärseitigen Heizungskreislaufs genutzt werden. Über ein zweites Verbindungselement 24 und eine zweite Zuführleitung 26, die mit der ersten Zuführleitung 16 verbunden ist, lässt sich der Rückstrom des ersten Wärmetauschers mit dem primärseitigen Wärmestrom mischen, um am primärseitigen Zulaufanschluss 12a des zweiten Wärmetauschers 12 einen Wärmestrom geeigneter Menge und Temperatur einzustellen. Die Mischung erfolgt über ein Regelventil mit Hilfsenergie 27, das den Zustrom des primärseitigen Wärmestroms in Abhängigkeit von dem Temperaturniveau und dem Wärmebedarf im sekundärseitig mit dem zweiten Wärmetauscher 12 verbundenen Heizungskreislauf 52 einstellt. Insbesondere bei geringem Heizungsbedarf, wie er sich beispielsweise in den Übergangsjahreszeiten ergibt, kann der Betrieb des zweiten Wärmetauschers 12 oftmals vornehmlich mit über die primärseitige erste Rücklaufleitung 18 des ersten Wärmetauschers 10 zugeführter Wärmeenergie erfolgen und auf eine Einspeisung des Primärwärmestroms aus der zweiten Zuführleitung 26 verzichtet werden.

Der über den primärseitigen Zulaufanschluss 12a zugeführte Wärmestrom durchläuft das primärseitige Leitungselement des zweiten Wärmetauschers 12 und tritt anschließend in eine zweite Rücklaufleitung 28 aus, die mit dem primärseitigen Rücklaufanschluss 12b des zweiten Wärmetauschers 12 gekoppelt ist. Das primärseitige Leitungselement steht in thermischem Kontakt mit dem sekundärseitigen Leitungselement des zweiten Wärmetauschers 12, das gegenläufig von dem Heizungswärmestrom 52 durchflossen wird.

In der gezeigten Ausführungsform handelt es sich bei dem Heizungskreislauf 52 um eine Niedertemperaturheizung, bei der Wasser mit einer Rücklauftemperatur von ca. 30°C in den sekundärseitigen Zulaufanschluss 12c des zweiten Wärmetauschers eintritt und nach der Erwärmung mit ca. 40°C aus dem sekundärseitigen Rücklaufanschluss 12d in den Heizungskreislauf austritt. Wenn die Heizungsanlage nicht in Betrieb ist, weil beispielsweise die Witterung ein Heizen der Wohnräume nicht erforderlich macht, zirkuliert das Wasser im Heizungskreislauf 52 nicht, und der zweite Wärmetauscher 12 wird primärseitig durchströmt, ohne dass ein Energieübertrag an den Heizungskreislauf 52 stattfindet.

Die zweite Rücklaufleitung 28 ist an ihrem dem primärseitigen Rücklaufanschluss 12b des zweiten Wärmetauschers 12 entgegengesetzten Ende mit dem primärseitigen Zulaufanschluss 14a des dritten Wärmetauschers 14 verbunden, so dass der aus dem zweiten Wärmetauscher 12 primärseitig austretende Rückstrom das primärseitige Leitungselement des dritten Wärmetauschers durchströmt und über den primärseitigen Rücklaufanschluss 14b und die dritte Rücklaufleitung 30 zum erneuten Aufheizen an die Fernwärmequelle zurückgeleitet wird.

Über ein drittes Verbindungselement 32 und eine dritte Zuführleitung 34, die mit der ersten Zuführleitung 16 gekoppelt ist, kann der Rücklaufstrom des zweiten Wärmetauschers 12 bei Bedarf zum Einstellen eines Flüssigkeitsstroms geeigneter Menge und Temperatur am primärseitigen Zulaufanschluss 14a des dritten Wärmetauschers 14 mit dem primärseitigen Wärmestrom gemischt werden. In der gezeigten Ausführungsform ist das dritte Verbindungselement 32 als Wasserstrahlpumpe ausgeführt, mit der sich analog zu der vorstehend mit Bezug auf das erste Verbindungselement 20 beschriebenen Weise ein geeignetes Mischungsverhältnis einstellen lässt. Ein Teil des Rückstroms des zweiten Wärmetauschers 12 lässt sich über einen zweiten Verbindungsknoten 36 direkt der dritten Rücklaufleitung 30 zuführen.

Wie vorstehend beschrieben, liegt die Funktion des dritten Wärmetauschers 14 in der Erwärmung und Zuführung von Frischwasser in den Zirkulationskreislauf 50, um eine Entnahme von Warmwasser aus dem Zirkulationskreislauf 50 auszugleichen. Aus einem Kaltwasserzulauf 38, der mit dem sekundärseitigen Zulaufanschluss 14c des dritten Wärmetauschers 14 verbunden ist, wird dem sekundärseitigen Leitungselement des Wärmetauschers Kaltwasser mit einer Temperatur von beispielsweise 12°C zugeführt und durch thermischen Kontakt mit dem gegenläufig durchströmten primärseitigen Leitungselement auf die Zirkulationsrücklauftemperatur, die in dem gezeigten Ausführungsbeispiel 55°C beträgt, erwärmt. Der erwärmte Wasserstrom wird über eine vierte Rücklaufleitung 40, die mit dem sekundärseitigen Rücklaufanschluss 14d des dritten Wärmetauschers 14 gekoppelt ist, in den Zirkulationskreislauf 50 eingespeist. Die vierte Rücklaufleitung 40 ist dazu an einem dem sekundärseitigen Rücklaufanschluss 14d entgegengesetzten Ende über einen dritten Verzweigungsknoten 42 mit einer vierten Zuführleitung 44, die mit dem sekundärseitigen Zulaufanschluss 10c des ersten Wärmetauschers 10 verbunden ist, gekoppelt.

Ein Strömungsmedium, das aus dem Warmwasserzirkulationskreislauf 50 entnommen wird, wird auf diese Weise über den dritten Wärmetauscher 14, die vierte Rücklaufleitung 40 und den dritten Verzweigungsknoten 42 in entsprechender Menge nachgespeist. Zur Erwärmung des nachgespeisten Frischwassers auf die Zirkulationsrücklauftemperatur von 55°C im dritten Wärmetauscher 14 wird die nachströmende Flüssigkeitsmenge unter Verwendung einer Durchflussmessvorrichtung 39 im Kaltwasserzulauf 38 gemessen. Die Messdaten werden über eine erste Datenverbindung 43 an das dritte Verbindungselement 32 übermittelt, das in Abhängigkeit der detektierten Flussrate die primärseitige Wärmezufuhr an den dritten Wärmetauscher 14 steuert. Dadurch lassen sich Temperatur- und Masseverluste im Warmwasserzirkulationskreislauf 50 sehr schnell ausgleichen.

Gleichzeitig wird die Temperatur des Zirkulationsrückstroms in der fünften Rücklaufleitung 58 in räumlicher Nähe zum sekundärseitigen Rücklaufanschlusses 10d des ersten Wärmetauschers 10 über eine Temperaturmessvorrichtung 41 erfasst und über eine zweite Datenverbindung 45 gleichfalls an das dritte Verbindungselement 32 übermittelt. Auf diese Weise lässt sich die dem dritten Wärmetauscher 14 primärseitig zuströmende Wärmemenge nachregeln und die Temperatur im Warmwasserzirkulationskreislauf konstant auf dem vorgegebenen Niveau halten.

Die Kombination einer anfänglichen Steuerung des dritten Wärmetauschers 14 über das dritte Verbindungselement 32 in Abhängigkeit der detektierten Durchflussmenge mit einer nachfolgenden Feinregelung in Abhängigkeit von der im Warmwasserzirkulationskreislauf detektierten Temperatur verbindet kurze Reaktionszeiten mit einer sehr präzisen Temperaturregelung. Da die Temperaturen in der vierten Rücklaufleitung 40 und in der vierten Zuführleitung 44 übereinstimmen, lassen sich Exergieverluste bei der Mischung der Wärmeströme am dritten Verzweigungsknoten 42 vermeiden.

In Experimenten wurde festgestellt, dass sich vorteilhafte Effekte ergeben, wenn die jeweils wärmere Seite des Wärmetauschers unterhalb der kühleren Seite des Wärmetauschers liegt, wie es in der Abbildung der Fig. 2 für den ersten Wärmetauscher 10 und dritten Wärmetauscher 14 schematisch angedeutet ist. In dieser Anordnung ermöglicht die Konvektion einen raschen Wärmetransport und verhindert die Ablagerung von Rückständen im Leitungsnetz des Wärmetauschers. Dadurch wird insbesondere einem Kalkausfall an der warmen Seite des Wärmetauschers vorgebeugt und die Lebensdauer der erfindungsgemäßen Fernwärmeübergabestation heraufgesetzt und der Wartungsbedarf vermindert.

In der in Fig. 2 gezeigten erfindungsgemäßen Wärmeübergabestation sind der erste 10, zweite 12 und dritte Wärmetauscher 14 als Kaskade in Reihe geschaltet, wobei die Wärmetauscher nach abnehmender Temperatur des sekundärseitigen Zustroms geordnet sind. Dadurch lässt sich die primärseitig über die erste Zuführleitung 16 zur Verfügung gestellt Wärmeenergie zu einem besonders großen Anteil in die Sekundärkreisläufe übertragen. Durch Bereitstellen eines dritten Wärmetauschers lassen sich zudem die Vermischung von Wärmeströmen unterschiedlicher Temperatur beim Zuführen von Frischwasser in den Zirkulationskreislauf und die damit verbundenen Exergieverluste vermeiden. Gegenüber einer konventionellen zweistufigen Kaskade, wie sie vorstehend mit Bezug auf Fig. 1a und Fig. 1b beschrieben ist, weist die erfindungsgemäße Übergabestation eine deutlich erniedrigte Rücklauftemperatur in der dritten Rücklaufleitung 30 und damit einen erhöhten Wirkungsgrad auf.

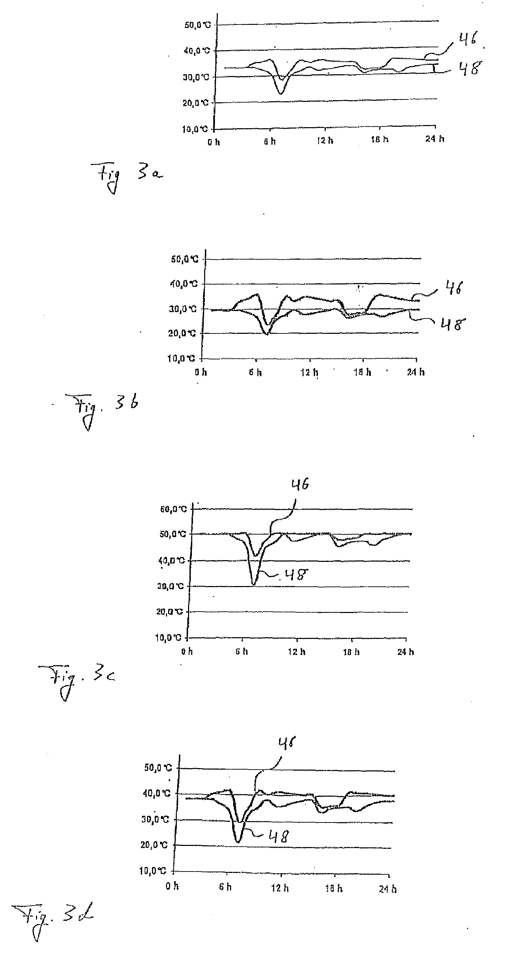

Der Effekt einer reduzierten Rücklauftemperatur, der eindrucksvoll die Vorteile der erfindungsgemäßen Wärmeübergabestation verdeutlicht, wird nachfolgend mit Bezug auf die Abbildungen der Fig. 3a bis 3d beschrieben. Die Figuren zeigen im Vergleich den zeitlichen Temperaturverlauf des Rückstroms an das Fernwärmekraftwerk für die zweistufige Kaskade der Fig. 1a und die erfindungsgemäße dreistufige Kaskade der Fig. 2. Der gezeigte Temperaturverlauf ist das Ergebnis einer Beispielrechnung, die den typischen Wasserverbrauch über den Zeitraum von 24 Stunden in einer Wohnanlage mit 27 Wohneinheiten und einer Heizung mit 160 kW Gesamtleistung zugrundelegt. Für die Rechnung wurde von zwei Personen je Wohneinheit und einem exemplarischen Trinkwasserbedarf von 75 Liter pro Tag und Person ausgegangen.

Fig. 3a veranschaulicht das Ergebnis einer Beispielrechnung für eine Niedertemperaturheizung mit einer Vorlauftemperatur von 40°C und einer Rücklauftemperatur von 30°C, wie sie exemplarisch in der Ausführungsform der Fig. 1a, 1b und 2 gezeigt ist, bei einer angenommenen Außentemperatur von -10°C. Die obere Kurve 46 zeigt den Rückstromtemperaturverlauf der zweistufigen Kaskade (Fig. 1a) in der Rückstromleitung 128, die untere Kurve 48 den Rückstromtemperaturverlauf der dreistufigen Kaskade (Fig. 2) in der dritten Rücklaufleitung 30. Wie der Figur zu entnehmen ist, ist die Rücklauftemperatur im Tagesverlauf zeitlichen Schwankungen ausgesetzt. Morgens und abends ergibt sich aufgrund des erhöhten Wasserverbrauchs und Heizungsbedarfs eine Absenkung der Rücklauftemperatur. Diese Absenkung ist morgens stärker ausgeprägt als abends.

Aus der Fig. 3a ist zu erkennen, dass die Rücklauftemperatur der dreistufigen Kaskade stets unterhalb der Rücklauftemperatur der zweistufigen Kaskade liegt. Die größte Differenz der Rücklauftemperaturen ergibt sich in den Perioden des größten Wasserverbrauchs. Aufgrund der verringerten Rücklauftemperatur und der damit einhergehenden Steigerung des Wirkungsgrads können folglich gerade in Spitzenzeiten hohen Wärmeverbrauchs mit einem Fernwärmenetz gegebener Kapazität größere Wärmemengen übertragen werden. Dadurch verringert sich auch die zum Umwälzen im Fernwärmekreislauf aufzuwendende Energie. Die herabgesetzte Rücklauftemperatur führt überdies zu geringeren Wärmeverlusten im Fernwärmeleitungsnetz und ermöglicht einen effizienteren Betrieb der Heizkraftwerke. Insgesamt ermöglicht die erfindungsgemäße Wärmeübergabestation daher eine besonders energieeffiziente und sparsame Übertragung von Fernwärme von dem Fernwärmeerzeuger zum Verbraucher.

Fig. 3b zeigt einen entsprechenden Rückstromtemperaturverlauf bei einer angenommenen Außentemperatur von 4°C. Die obere Kurve 46 zeigt wiederum den Rückstromtemperaturverlauf der vorbekannten zweistufigen Kaskade, die untere Kurve 48 den Rückstromtemperaturverlauf der erfindungsgemäßen dreistufigen Kaskade. Der Effekt einer verminderten Rückstromtemperatur ist ähnlich ausgeprägt wie in der Abbildung der Fig. 3a.

In der Fig. 3c ist der Rückstromtemperaturverlauf wiederum bei einer angenommenen Außentemperatur von -10°C aufgetragen, jedoch nicht für eine Niedertemperaturheizung, sondern für eine konventionelle Heizung mit einer Rücklauftemperatur von 50°C und einer Vorlauftemperatur von 70°C. Im Vergleich zum Temperaturverlauf der Fig. 3a und 3b ist die Rückstromtemperatur sowohl bei der zweistufigen Kaskade als auch bei der dreistufigen Kaskade insgesamt erhöht. Jedoch zeigt sich auch in dieser Ausführungsform eine deutliche Absenkung der Rückstromtemperatur der dreistufigen Kaskade im Vergleich zur zweistufigen Kaskade, insbesondere in den Zeiten höchsten Verbrauchs.

Fig. 3d zeigt einen entsprechenden Temperaturverlauf bei einer angenommenen Außentemperatur von 4°C.

In der vorstehend beschriebenen bevorzugten Ausführungsform sind sowohl der Heizungskreislauf 52 als auch der Warmwasserzirkulationskreislauf 50 mit der Kaltwassernachspeisung 38 hydraulisch über jeweilige Wärmetauscher vom Fernwärmeleitungsnetz getrennt. In einer alternativen Ausführungsform, bei der die erfindungsgemäße Wärmeübergabestation in einem Nahwärmeleitungsnetz mit geringerem Druck eingesetzt wird, ist die hydraulische Trennung des Heizungskreislaufs 52 vom Versorgungsnetz entbehrlich. Eine solche Ausführungsform unterscheidet sich von der in Fig. 2 gezeigten und vorstehend detailliert beschriebenen Ausführung allein dadurch, dass der zweite Wärmetauscher 12 durch eine direkte Verbindung zwischen der primärseitigen ersten Rücklaufleitung 18 und dem Heizungsstrom 56 sowie eine direkte Verbindung zwischen dem Heizungsstrom 54 und der zweiten Rücklaufleitung 28 ersetzt ist. In einer solchen Ausführungsform strömt das über die primärseitige erste Rücklaufleitung 18 bzw. die erste Zuführleitung 16 und die zweite Zuführleitung 26 bereitgestellte Strömungsmedium direkt in den Heizungskreislauf 52 ein und nach erfolgter Abkühlung aus dem Heizungskreislauf 52 über die Leitungen 54 und 28 an den dritten Wärmetauscher 14 bzw. in das Versorgungsnetz zurück.

Der Verzicht auf den zweiten Wärmetauscher 12 führt zu einem vereinfachten Aufbau der erfindungsgemäßen Wärmeübergabestation, der sich durch verminderten Wartungsbedarf und geringere Verschleißanfälligkeit auszeichnet. Die vorstehend mit Bezug auf Fig. 2 erläuterten Vorteile der erfindungsgemäßen Übergabestation, insbesondere die Verringerung der Exergieverluste und die Steigerung des thermodynamischen Wirkungsgrades, gelten entsprechend ohne Einschränkungen auch für die alternative Ausführungsform ohne hydraulische Trennung des Heizungskreislaufs.

Die vorstehend beschrieben Ausführungsformen und Zeichnungen dienen allein der Illustration und sollen die Erfindung keinesfalls einschränken. Der Schutzumfang des erfindungsgemäßen Verfahrens zur Wärmeübergabe und der erfindungsgemäßen Fernwärme-Übergabestation ergibt sich allein aus den nachfolgenden Ansprüchen.

### Bezugszeichenliste

- 10: erster Wärmetauscher
- 10a: primärseitiger Zulaufanschluss des ersten Wärmetauschers 10
- 10b: primärseitiger Rücklaufanschluss des ersten Wärmetauschers 10
- 10c: sekundärseitiger Zulaufanschluss des ersten Wärmetauschers 10
- 10d: sekundärseitiger Rücklaufanschluss des ersten Wärmetauschers 10
- 12: zweiter Wärmetauscher
- 12a: primärseitiger Zulaufanschluss des zweiten Wärmetauschers 12
- 12b: primärseitiger Rücklaufanschluss des zweiten Wärmetauschers 12
- 12c: sekundärseitiger Zulaufanschluss des zweiten Wärmetauschers 12
- 12d: sekundärseitiger Rücklaufanschluss des zweiten Wärmetauschers 12
- 14: dritter Wärmetauscher
- 14a: primärseitiger Zulaufanschluss des dritten Wärmetauschers 14
- 14b: primärseitiger Rücklaufanschluss des dritten Wärmetauschers 14
- 14c: sekundärseitiger Zulaufanschluss des dritten Wärmetauschers 14
- 14d: sekundärseitiger Rücklaufanschluss des dritten Wärmetauschers 14
- 16: primärseitige erste Zuführleitung; primärseitiger Wärmestrom
- 18: primärseitige erste Rücklaufleitung; primärseitiger Rückstrom des ersten Wärmetauschers 10
- 20: erstes Verbindungselement
- 22: erster Verzweigungsknoten
- 24: zweites Verbindungselement
- 26: zweite Zuführleitung
- 27: Ventil mit Hilfsenergie
- 28: zweite Rücklaufleitung; primärseitiger Rückstrom des zweiten Wärmetauschers 12
- 30: dritte Rücklaufleitung
- 32: drittes Verbindungselement
- 34: dritte Zufuhrleitung
- 36: zweiter Verzweigungsknoten
- 38: Kaltwasserzulauf; dritter Wärmestrom
- 39: Durchflussmessvorrichtung
- 40: vierte Rücklaufleitung
- 41: Temperaturmessvorrichtung
- 42: dritter Verzweigungsknoten
- 43: erste Datenverbindung
- 44: vierte Zuführleitung
- 45: zweite Datenverbindung
- 46: Rückstromtemperaturverlauf zweistufige Kaskade
- 48: Rückstromtemperaturverlauf dreistufige Kaskade
- 50: Warmwasserzirkulationskreislauf; erster Wärmestrom
- 52: Heizungskreislauf; zweiter Wärmestrom
- 54: Heizungszustrom des zweiten Wärmetauschers 12
- 56: Heizungsrückstrom des zweiten Wärmetauschers 12
- 58: Zirkulationsrückstrom, fünfte Rücklaufleitung
- 110: erster Wärmetauscher
- 110a: primärseitiger Zulaufanschluss des ersten Wärmetauschers 110
- 110b: primärseitiger Rücklaufanschluss des ersten Wärmetauschers 114
- 110c: sekundärseitiger Zulaufanschluss des ersten Wärmetauschers 110
- 110d: sekundärseitiger Rücklaufanschluss des ersten Wärmetauschers 110
- 112: zweiter Wärmetauscher
- 112a: primärseitiger Zulaufanschluss des zweiten Wärmetauschers 112
- 112b: primärseitiger Rücklaufanschluss des zweiten Wärmetauschers 112
- 112c: sekundärseitiger Zulaufanschluss des zweiten Wärmetauschers 112
- 112d: sekundärseitiger Rücklaufanschluss des zweiten Wärmetauschers 112
- 114: primärseitiger Wärmestrom
- 116: primärseitiger Rückstrom des ersten Wärmetauschers 110
- 118: sekundärseitiger Heizungszustrom
- 120: sekundärseitiger Heizungsrückstrom
- 122: Verbindungsleitung
- 124: Ventil
- 126: Verbindungsknoten
- 128: primärseitiger Rückstrom des zweiten Wärmetauschers 112
- 130: Heizungskreislauf
- 132: Zirkulationskreislauf
- 134: Kaltwasserzulauf
- 210: zweiter Wärmetauscher
- 210a: primärseitiger Zulaufanschluss des zweiten Wärmetauschers 210
- 210b: primärseitiger Rücklaufanschluss des zweiten Wärmetauschers 210
- 210c: sekundärseitiger Zulaufanschluss des zweiten Wärmetauschers 210
- 210d: sekundärseitiger Rücklaufanschluss des zweiten Wärmetauschers 210
- 212: dritter Wärmetauscher
- 212a: primärseitiger Zulaufanschluss des dritten Wärmetauschers 212
- 212b: primärseitiger Rücklaufanschluss des dritten Wärmetauschers 212
- 212c: sekundärseitiger Zulaufanschluss des dritten Wärmetauschers 212
- 212d: sekundärseitiger Rücklaufanschluss des dritten Wärmetauschers 212
- 214: primärseitiger Rückstrom des zweiten Wärmetauschers 210
- 216: Warmwasserzirkulationszustrom
- 218: Warmwasserzirkulationsrückstrom
- 220: primärseitiger Rückstrom des dritten Wärmetauschers 212
- 222: Kaltwasserzulauf
- 224: sekundärseitiger Rückstrom des dritten Wärmetauschers 212
- 226: Verzweigungsknoten

## Patentansprüche

1. Verfahren zur Wärmeübergabe in einer Fernwärme-Übergabestation oder Nahwärme-Übergabestation oder Trinkwasserübergabestation mit folgenden Schritten:
Zuführen eines primärseitigen Wärmestromes (16) an einen ersten Wärmetauscher (10) zum Aufheizen eines sekundärseitigen ersten Wärmestromes (50);
Aufheizen eines zweiten Wärmestromes (52) unter Verwendung eines primärseitigen Rückstroms (18) des ersten Wärmetauschers (10);
Aufheizen eines von dem zweiten Wärmestrom (52) getrennten dritten Wärmestromes (38) unter Verwendung des zweiten Wärmestromes (52).

2. Verfahren nach Anspruch 1, bei dem das Aufheizen des sekundärseitigen zweiten Wärmestromes (52) das Zuführen des primärseitigen Rückstroms (18) des ersten Wärmetauschers (10) an einen zweiten Wärmetauscher (12) umfasst und das Aufheizen des sekundärseitigen dritten Wärmestromes (3 8) das Zuführen eines primärseitigen Rückstroms (28) des zweiten Wärmetauschers (12) an einen dritten Wärmetauscher (14) umfasst.

3. Verfahren nach Anspruch 2, bei dem der primärseitige Rückstrom (18) des ersten Wärmetauschers (10) eine höhere Temperatur aufweist als ein sekundärseitiger Zustrom (54) des zweiten Wärmetauschers (12) und/oder der primärseitige Rückstrom (28) des zweiten Wärmetauschers (12) eine höhere Temperatur aufweist als ein sekundärseitiger Zustrom (38) des dritten Wärmetauschers (14).

4. Verfahren nach Anspruch 1, bei dem das Aufheizen des zweiten Wärmestromes (52) das zumindest teilweise Einspeisen des primärseitigen Rückstroms (18) des ersten Wärmetauschers (10) in den zweiten Wärmestrom (52) umfasst und das Aufheizen des sekundärseitigen dritten Wärmestromes (38) das Zuführen eines Rückstromes (28) des zweiten Wärmestromes (52) an einen dritten Wärmetauscher (14) umfasst.

5. Verfahren nach einem der vorangehenden Ansprüche, bei dem der primärseitige Rückstrom (18) des ersten Wärmetauschers (10) vor dem Aufheizen des zweiten Wärmestromes (52) in einem vorbestimmten ersten Mischungsverhältnis mit dem primärseitigen Wärmestrom (16,26) gemischt wird.

6. Verfahren nach einem der Ansprüche 2 bis 5, bei dem der Rückstrom (28) des zweiten Wärmetauschers (12) bzw. des zweiten Wärmestromes (52) vor dem Zuführen an den dritten Wärmetauscher (14) in einem vorbestimmten zweiten Mischungsverhältnis mit dem primärseitigen Wärmestrom (16,34) gemischt wird.

7. Verfahren nach einem der vorangehenden Ansprüche, bei dem der primärseitige Wärmestrom (16) vor dem Zuführen an den ersten Wärmetauscher (10) in einem vorbestimmten dritten Mischungsverhältnis mit dem primärseitigen Rückstrom (18) des ersten Wärmetauschers (10) gemischt wird.

8. Verfahren nach einem der vorangehenden Ansprüche, bei dem das Aufheizen des dritten Wärmestromes (38) in einem ersten Schritt in Abhängigkeit von der aus dem sekundärseitigen ersten Wärmestrom (50) entnommenen Menge des Strömungsmediums gesteuert und in einem nachfolgenden zweiten Schritt in Abhängigkeit von der Temperatur eines sekundärseitigen Rückstromes (58) des ersten Wärmetauschers (10) geregelt wird.

9. Fernwärme- oder Nahwärme-Übergabestation mit:
einem ersten Wärmetauscher (10), einem zweiten Wärmetauscher (12) und einem dritten Wärmetauscher (14) mit jeweils einem primärseitigen Zulaufanschluss (10a, 12a, 14a) und einem primärseitigen Rücklaufanschluss (10b, 12b, 14b) sowie einem sekundärseitigen Zulaufanschluss (10c, 12c, 14c) und einem sekundärseitigen Rücklaufanschluss (10d, 12d, 14d);
einer primärseitigen ersten Zuführleitung (16), die an einem ersten Ende mit dem primärseitigen Zulaufanschluss (10a) des ersten Wärmetauschers (10) gekoppelt ist und an einem dem ersten Ende entgegengesetzten zweiten Ende mit einer Wärmequelle koppelbar ist;
einer primärseitigen ersten Rücklaufleitung (18), die an einem ersten Ende mit dem primärseitigen Rücklaufanschluss (10b) des ersten Wärmetauschers (10) und an einem dem ersten Ende entgegengesetzten zweiten Ende mit dem primärseitigen Zulaufanschluss (12a) des zweiten Wärmetauschers (12) gekoppelt ist; und
einer primärseitigen zweiten Rücklaufleitung (28), die an einem ersten Ende mit dem primärseitigen Rücklaufanschluss (12b) des zweiten Wärmetauschers (12) und an einem dem ersten Ende entgegengesetzten zweiten Ende mit dem primärseitigen Zulaufanschluss (14a) des dritten Wärmetauschers (14) gekoppelt ist.

10. Fernwärme- oder Nahwärme-Übergabestation mit:
einem ersten Wärmetauscher (10) und einem dritten Wärmetauscher (14) mit jeweils einem primärseitigen Zulaufanschluss (10a, 14a) und einem primärseitigen Rücklaufanschluss (10b, 14b) sowie einem sekundärseitigen Zulaufanschluss (10c, 14c) und einem sekundärseitigen Rücklaufanschluss (10d, 14d);
einer primärseitigen ersten Zuführleitung (16), die an einem ersten Ende mit dem primärseitigen Zulaufanschluss (10a) des ersten Wärmetauschers (10) gekoppelt ist und an einem dem ersten Ende entgegengesetzten zweiten Ende mit einer Wärmequelle koppelbar ist;
einer primärseitigen ersten Rücklaufleitung (18), die an einem ersten Ende mit dem primärseitigen Rücklaufanschluss (10b) des ersten Wärmetauschers (10) und an einem dem ersten Ende entgegengesetzten zweiten Ende mit einer Zulaufleitung (56) eines Zirkulationskreislaufs (52), insbesondere eines Heizungskreislaufs, verbunden ist;
einer zweiten Rücklaufleitung (28), die an einem ersten Ende mit einer Rücklaufleitung (54) des Zirkulationskreislaufs (52) und an einem dem ersten Ende entgegengesetzten zweiten Ende mit dem primärseitigen Zulaufanschluss (14a) des dritten Wärmetauschers (14) gekoppelt ist.

11. Übergabestation nach Anspruch 9 oder 10, bei dem die erste Rücklaufleitung (18) über ein erstes Verbindungselement (20) mit der ersten Zuführleitung (16) gekoppelt ist.

12. Übergabestation nach einem der Ansprüche 9 bis 11, bei dem die erste Rücklaufleitung (18) über ein zweites Verbindungselement (24) mit einer zweiten Zuführleitung (26), die mit der Wärmequelle verbindbar oder mit der ersten Zuführleitung (16) verbunden ist, gekoppelt ist.

13. Übergabestation nach einem der Ansprüche 11 oder 12 mit zusätzlich einem Steuerelement zum Einstellen eines Mischungsverhältnisses an dem ersten Verbindungselement (20) und/ oder zweiten Verbindungselement (24).

14. Übergabestation nach einem der Ansprüche 9 bis 13, bei dem der sekundärseitige Rücklaufanschluss (14d) des dritten Wärmetauschers (14) über eine vierte Rücklaufleitung (40) mit einer sekundärseitigen vierten Zuführleitung (44), die mit dem sekundärseitigen Zulaufanschluss (10c) des ersten Wärmetauschers (10) verbunden ist, gekoppelt.

15. Übergabestation nach Anspruch 14 mit zusätzlich einer Temperaturerfassungseinrichtung (41) zur Erfassung der Temperatur eines Strömungsmediums in einer mit dem sekundärseitigen Rücklaufanschluss (10d) des ersten Wärmetauschers (10) verbundenen fünften Rücklaufleitung (58) und/ oder einer Durchflusserfassungseinrichtung (39) zur Erfassung einer Stromrate und/oder Strommenge eines Strömungsmediums in einer mit dem sekundärseitigen Zulaufanschluss (14c) des dritten Wärmetauschers (14) verbundenen sekundärseitigen fünften Zuführleitung (38).
